# EUROPÄISCHE PATENTSCHRIFT

(11) **EP 2 310 703 B1**
(45) Veröffentlichungstag und Bekanntmachung des Hinweises auf die Patenterteilung: **20.03.2013**
(21) Anmeldenummer: 09776030.0
(22) Anmeldetag: 30.07.2009
(51) Int. Cl.: F16C 41/00, H01Q 9/04, H01Q 1/22, H01Q 21/06

(54) **LAGERRING MIT EINER ANTENNE**
BEARING RING WITH AN ANTENNA
BAGUE D'UN PALIER AVEC UNE ANTENNE

(30) Priorität: 02.08.2008 DE 102008036225
(43) Veröffentlichungstag der Anmeldung: 20.04.2011
(73) Patentinhaber: Schaeffler Technologies AG & Co. KG, 91074 Herzogenaurach (DE)
(72) Erfinder: RINK, Thomas, 97705 Waldfenster (DE)
(86) Internationale Anmeldenummer: PCT/DE2009/001060
(87) Internationale Veröffentlichungsnummer: WO 2010/015231

(56) Entgegenhaltungen:
- DE-A1-102006 029 248
- DE-T5-112004 002 234
- DE-U1-202007 006 597
- JP-A- 2006 258 242
- US-B1- 6 246 327

## Beschreibung

### Gebiet der Erfindung

Die Erfindung betrifft einen Lagerring nach Anspruch 1.

Für Lagerbestandteile bzw. Lageranordnungen ist aus der Praxis bekannt, dem Korpus des Lagerbestandteils bzw. einem Korpus der Lageranordnung eine Antenne zuzuordnen, wobei die Antenne als Sende- und / oder Empfangseinheit beispielsweise eines Senders oder einer Markierung, speziell eines RFID-Elementes bzw. einer Codierung mittels einer Reflektoranordnung für Oberflächenwellen (SAW - surface acoustic waves) vorgesehen ist.

Der Begriff Lagerbestandteil bezeichnet im folgenden einen Teil eines Lagers, insbesondere einen Lagerring eines rotativen Wälz- oder Gleitlagers bzw. einer Linearführung, oder einen Lagerring eines linearen Wälz- oder Gleitlagers bzw. einer Linearführung. Der Begriff Lagerbestandteil schließt dabei auch einen Wälzkörper ein sowie eine solche Vorrichtungen, die einen Wälzkörper führt, speziell also einen Wälzkörperkäfig für ein rotatives Wälzlager oder für ein Linearlager oder für eine Linearführung. Der Begriff Lagerbestandteil umfasst ebenfalls eine Dichtung, die für das Lager vorgesehen ist, sowie eine Welle, die in dem Lager drehbar bzw. verschieblich gelagert aufgenommen ist.

Der Begriff Lageranordnung bezeichnet im folgenden eine Vorrichtung, umfassend ein Lager, ggf. einschließlich einer in dem Lager gelagerten Welle, und eine Lageraufnahme, in der das Lager aufgenommen ist. Die Lageraufnahme kann als Anschlusskonstruktion ausgelegt sein, in der das Lager feststehend angeordnet ist.

Sofern im folgenden auf ein Lager, ein Lagerbestandteil oder eine Lageranordnung Bezug genommen wird, versteht es sich, dass der jeweils andere, nicht explizit aufgeführte Begriff sinngemäß ebenfalls gemeint ist.

In der Praxis erweist sich als ungünstig, dass sowohl das Lager, insbesondere dessen Lagerbestandteile einschließlich der in dem Lager gelagerten Welle, oder die das Lager aufnehmende Lageraufnahme aus einem metallischen Werkstoff gefertigt sind, wobei dieser metallische Werkstoff ein starker Reflektor für elektromagnetische Strahlen darstellt, so dass die Antenne nur schwer anzusprechen ist. Diese Schwierigkeiten treten speziell für Dipol-Antennen auf, die in der meist metallischen Umgebung des Lagers bzw. der Lageraufnahme nur eine geringe Leistungsfähigkeit und Reichweite sowie Bandbreite aufweisen.

US 6,501,382 B1 beschreibt einen Außenring eines Wälzlagers als Lagerbestandteil, dem ein RFID-Element zugeordnet ist, wobei das RFID-Element mittels einer Antenne ansprechbar ist. Die Antenne ist insbesondere als Ferrit-Spulenantenne ausgebildet.

EP 1 736 675 A1 beschreibt allgemein ein RFID-Element an dem Korpus einer Linearführung. Das RFID-Element wird mittels einer nicht näher beschriebenen Antenne von außen angesprochen und ausgelesen.

DE 10017 572 A1 beschreibt einen Sensor an dem Korpus eines als Außenring eines rotativen Wälzlagers ausgebildeten Lagerbestandteils, wobei die Antenne des Sensors in Form eines gewundenen oder mäandrierenden Leiters, speziell eines Streifenleiters, ausgebildet ist. Bei dieser Anordnung macht sich die metallische Umgebung des Korpus des Lagerteils in unmittelbarer Nähe der Antenne störend bemerkbar. Zudem ist ein gewundener oder mäandrierender Leiter nur aufwendig und mit nur geringer Reproduziergenauigkeit herstellbar.

DE 10 2006 029 248 A1 beschreibt allgemein eine Schlitzantenne für ein Korpus eines metallischen Trägers als Sende- und Empfangseinheit eines RFID-Elementes.

DE 11 2004 002 234 T5 beschreibt ein als Dichtungselement für ein Lager ausgebildetes Lagerbestandteil, wobei das Dichtungselement eine metallische Einlage aufweist, die ringförmig ausgebildet ist, allerdings an einer Stelle unterbrochen wurde, so dass eine ringförmige Dipolantenne entsteht, die als Sende- und Empfangseinheit für ein RFID-Element ausgebildet ist, das ebenfalls in dem Dichtungselement aufgenommen ist. Eine derartige annähernd kreisringförmige Antenne weist nur eine schlechte Charakteristik auf. Zudem wird die Funktion der Einlage als mechanische Stütze des Dichtungselementes durch die Unterbrechung in dem Kreisring verschlechtert.

### Aufgabe der Erfindung

Es ist die Aufgabe der Erfindung, ein Lagerbestandteil, insbes einen Lagerring mit einer für die Abfragung mittels elektromagnetischer Strahlen günstigen Antenne anzugeben.

### Zusammenfassung der Erfindung

Diese Aufgabe wird erfindungsgemäß durch einen Lagerring nach Anspruch 1.

Als Patch-Antenne wird dabei eine Antennenbauform bezeichnet, die ein metallisch leitendes Antennenelement umfasst, das von einer nichtleitenden Zwischenschicht auf einem metallisch leitenden Träger aufgebracht ist. Das Antennenelement ist beispielsweise rechteckig ausgebildet und weist dann eine Seite auf, deren Länge ungefähr der Hälfte der Wellenlänge entspricht, auf die die Patch-Antenne abgestimmt ist. Die Zwischenschicht kann ein festes Dielektrikum sein, allerdings auch Luft bzw. Vakuum. Als metallisch leitender Träger kann ein Abschnitt des Korpus des Lagerbestandteils ausgebildet sein, so dass der metallische Werkstoff des Lagerbestandteils nicht etwa die Funktion der Antenne stört, sondern Bestandteil der Antenne wird.

Das Antennenelemente ist dabei leicht herzustellen; speziell können Reste bei der Herstellung des Lagerbestandteils als Antennenelement wiederverwendet werden.

Als Patch-Antenne kann ein einzelnes Antennenelement vorgesehen sein, alternativ hierzu können zwei oder mehr jeweils elektrisch leitende Antennenelemente zu einer größeren Antennenanordnung geschaltet werden, wobei die zwei oder mehr Antennenelemente mittels einer elektrischen Leitung, beispielsweise mittels einer Streifenleitung, verbunden werden. Der Abstand zwischen zwei benachbarten Antennenelementen wird dabei auf die Wellenlänge abgestimmt, auf die jedes der beiden Antennenelemente ansprechen soll.

Eine derartige Patch-Antenne, sowohl mit einem einzelnen Antennenelement als auch mit einer gekoppelten Anordnung von mindestens zwei Antennenelementes, lässt sich leicht und kleinbauend ausbilden und auch gerade in einer metallischen Umgebung sicher ansprechen.

Vorzugsweise ist hinsichtlich der Zuordnung der Patch-Antenne zu dem Lagerbestandteil, insbes, Lagerring bzw. der Lageraufnahme vorgesehen, dass die Patch-Antenne an dem Korpus des Lagerbestandteils bzw. der Lageraufnahme befestigt ist. Hierbei lässt sich insbesondere der meistens metallische Werkstoff des Materials des Korpus als Träger der Patch-Antenne schalten. Sofern das Korpus nicht aus einem metallisch leitenden Material hergestellt ist, weist die Patch-Antenne eine metallische Schicht auf, die - durch die elektrisch isolierende Zwischenschicht von dem Antennenelement getrennt - den Träger ausbildet, so dass die Patch-Antenne als unabhängig von dem Lagerbestandteil hergestellte Baueinheit an dem Korpus befestigt ist.

Vorzugsweise ist hinsichtlich der an dem Korpus des Lagerbestandteils, insbes, Lagerrings bzw. der Lageraufnahme befestigten Patch-Antenne vorgesehen, dass die Ausnehmung bzw. Öffnung, in der die Patch-antenne aufgenommen ist an der Stirnfläche des Korpus vorgesehen ist. Die Stirnfläche bleibt in einer Einbaustellung des Lagers von außen zugänglich, so dass die Patch-Antenne mittels einer Abfrageeinheit angesprochen werden kann. Die Anordnung in der Ausnehmung stellt sicher, dass die Patch-Antenne geschützt aufgenommen ist, wobei die Ausnehmung mit einer Füllmasse verschlossen sein kann, so dass die ausgefüllte Ausnehmung mit der angrenzenden Umgebung bündig abschließt. Die Ausnehmung bzw. Öffnung kann als Sackloch - oder Blindbohrung ausgebildet sein, oder als durch das Korpus abschnittsweise durchgehende Bohrung.

Alternativ zu der Anordnung der Patch-Antenne an dem Korpus des Lagerbestandteils, insbes. Lagerrings ist hinsichtlich der Zuordnung der Patch-Antenne zu dem Lagerbestandteil vorzugsweise vorgesehen, dass die Patch-Antenne mit einem weiteren Element verbunden ist, das an dem Korpus eines der Lagerbestandteile befestigt ist. Die Patch-Antenne kann dabei der Lageraufnahme, in der das Lager mit dem Lagerbestandteil aufgenommen ist, oder der in dem Lager gelagerten Welle zugeordnet sein, allerdings ist das weitere Element, speziell die Markierung oder der Sensor, mit dem die Patch-Antenne zusammenwirkt, speziell dessen Sende- oder Empfangseinheit die Patch-Antenne bildet, auf dem Lagerbestandteil angeordnet. Die Verbindung zwischen der Patch-Antenne und dem weiteren Element ist beispielsweise galvanisch ausgebildet (falls der Lagerbestandteil und die Lageraufnahme relativ zueinander unbeweglich sind, beispielsweise wenn die Patch-Antenne an der Lageraufnahme angeordnet ist und das weitere Element an dem Lageraußenring vorgesehen ist, und der Lageraußenring in der Lageraufnahme feststehend angeordnet ist). Bewegen sich die Patch-Antenne und das weitere Element relativ zueinander, ist die Verbindung beispielsweise induktiv oder kapazitiv ausgebildet, beispielsweise für den Fall, dass die Patch-Antenne an der Lageraufnahme angeordnet ist und das weitere Element an einem bezüglich der Lageraufnahme beweglichen Lagerinnenring.

Vorzugsweise ist vorgesehen, dass die Patch-Antenne als Empfängereinheit mittels linear, insbesondere mittels zirkular polarisierter Strahlung ansprechbar ist, so dass weitgehend unabhängig von der genauen Orientierung des Antennenelementes der Patch-Antenne relativ zu der Abfrageeinheit sichergestellt ist, dass die Patch-Antenne auf die Abfrageeinheit anspricht. Umfasst die Patch-Antenne zwei im wesentlichen um 90° zueinander versetzte Kanten, erzeugen diese zwei um im wesentlichen ca. 90° versetzte Strahlen, so dass die Patch-Antenne auch als Sendeeinheit ausgestaltet sein kann, die zirkular-polarisierte Strahlen abstrahlt.

Vorzugsweise ist vorgesehen, dass die Patch-Antenne als von dem Korpus des Lagerrings getrenntes Bauteil gefertigt ist. Hierbei besteht eine Freiheit hinsichtlich der Wahl des Materials für das Antennenelement bzw. das Dielektrikum sowie - falls das Material des Korpus des Lagerbestandteils nicht als Träger für die Patch-Antenne genutzt werden soll - für die Wahl des Materials des Trägers. Insbesondere lassen sich Lagerbestandteile nachträglich mit einer Patch-Antenne versehen, speziell solche Lagerbestandteile, deren Lager bereits in der Einbaustellung befindlich sind. Das Bauteil kann insbesondere als Steckmodul ausgebildet sein, das weitgehend unabhängig von der Ausgestaltung des Lagerbestandteils ausgebildet ist und einfach an dem Lagerbestandteil befestigt werden kann.

Vorzugsweise ist vorgesehen, dass die Patch-Antenne Teil einer Anordnung mehrerer, zusammen wirkender Antennen ist. Insbesondere kann ein einzelnes Antennenelement mit einem weiteren Antennenelement zu einer Patch-Antenne verbunden werden, die jeweils zwei Teil-Patch-Antennen als Bestandteile umfasst. Insbesondere lassen sich mehrere Patch-Antennen zu einer größeren Antenne zusammenschalten, so dass die größere Antenne eine verbesserte Verstärkung und Reichweite sowie Richtwirkung wie die einzelnen Teil-Antennen aufweist. Ebenso kann vorgesehen sein, dass eine Patch-Antenne oder eine Anordnung von mindestens zwei einzelnen Patch-Antennen mit einer Antenne eines anderen Bautyps, speziell einer Schlitz - oder einer Dipol-Antenne, zusammenwirkt, etwa derart, dass die Patch-Antenne bzw. die Anordnung von mindestens zwei einzelnen, zusammengeschalteten Patch-Antennen in einem Schlitz in dem Korpus des Lagerbestandteits, speziell in einer Ausnehmung, angeordnet ist, und die Berandung der Ausnehmung als Schlitzantenne für die Patch-Antenne bzw. die Anordnung der mindestens zwei Patch-Antennen geschaltet ist. Alternativ oder ergänzend hierzu kann vorgesehen sein, dass die Patch-Antenne die Wirkung einer Dipol-Antenne verstärkt, beispielsweise derart, indem die Patch-Antenne bzw. die Anordnung von mindestens zwei Patch-Antennen eine Richtcharakteristik aufweisen, die genau auf die Charakteristik der Dipol-Antenne abgestimmt ist. Speziell lassen sich Dipol-Antennen, die in einer metallischen Umgebung nur eine geringe Leistung und Reichweite aufweisen, durch zugeordnete Patch-Antennen verstärken, wobei die Patch-Antenne bzw. die Anordnung der mindestens zwei Patch-Antennen nachträglich angebracht werden kann.

Vorzugsweise ist vorgesehen, dass die Patch-Antenne eine Hohlleiter-Maske umfasst. Die Hohlleiter-Maske umfasst eine elektrisch leitende Fläche mit einer Ausnehmung, wobei die Ausnehmung die Wirkung einer Patch-Antenne mit einem elektrisch leitenden Antennenelement aufweist, dessen geometrische Abmessung der Form der Ausnehmung entspricht (Babinefsches Theorem). Insbesondere lassen sich mehrere, in Abmessung und relativer Anordnung zueinander abgestimmte Ausnehmungen, speziell Ausnehmungen von im wesentlichen rechteckiger Berandung, leicht mittels Stanzen eines metallischen Bleches herstellen und flächig auf ein Dielektrikum über einer metallischen Trägerschicht auftragen; speziell kann die metallische Trägerschicht ein nicht mit Ausstanzungen versehenes weiteres Blech sein. Die Hohlleiter-Maske, insbesondere also das die Ausstanzungen aufweisende Blech, bildet dabei einen Schutz für die weiteren darunterliegenden Schichten.

Besonders bevorzugt ist eine Vorrichtung zur Verstärkung einer Dipol-Antenne vorgesehen, umfassend einen Verbund aus einer metallischen Trägerschicht, eine erste Zwischenschicht aus einem Dielektrikum, einer Platte mit einer Dipol-Antenne, einer zweiten Zwischenschicht aus dem Dielektrikum der ersten Zwischenschicht oder einem weiteren Dielektrikum, und einer Hohlleiter-Maske aus einem metallischen Blech mit Ausnehmungen, die relativ zu der Dipol-Antenne so ausgerichtet sind, dass die Leistungscharakteristik der Dipol-Antenne verstärkt wird. Es versteht sich, dass anstelle der Dipol-Antenne auch eine oder mehrere Patch-Antenne(n) vorgesehen sein können, insbesondere eine Patch-Antenne, dessen Antennenelement aus dem Ausnehmungen in dem Blech der Hohlleiter-Maske stammt.

Weitere Vorteile und Merkmale ergeben sich aus den abhängigen Ansprüchen sowie aus der Beschreibung von Ausführungsbeispielen der Erfindung. Die Erfindung wird im folgenden unter Bezugnahme auf die anliegenden Zeichnungen näher beschrieben und erläutert.

### Kurze Beschreibung der Zeichnungen

- Fig. 1: zeigt ausschnittsweise eine perspektivische Ansicht eines ersten Ausführungsbeispiels eines erfindungsgemäßen Lagerbestandteils; und
- Fig. 2: zeigt ausschnittsweise eine Draufsicht auf ein zweites Ausführungsbeispiel eines erfindungsgemäßen Lagerbestandteils.

### Detaillierte Beschreibung der Zeichnung

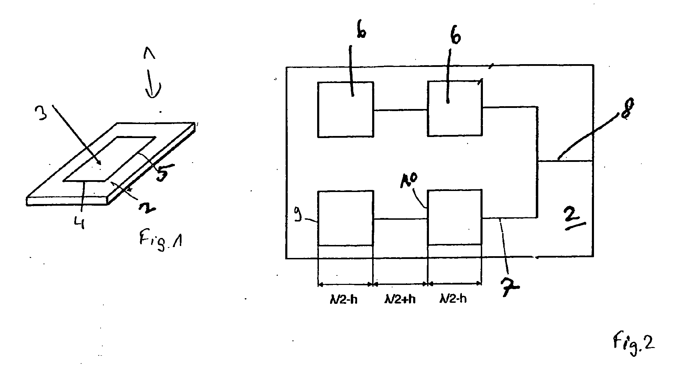

Fig. 1 zeigt ein näher dargestelltes Korpus eines Lagerbestandteils, insbesondere eines Lagerrings eines Wälzlagers, in dessen Stirnfläche eine nicht näher dargestellte, als Blindbohrung oder Sacklochbohrung ausgebildete Ausnehmung angebracht ist. In der Ausnehmung ist die Patch-Antenne 1 aufgenommen.

Die metallische Bodenfläche der Ausnehmung ist als elektrisch leitender Träger der Patch-Antenne 1 ausgebildet. Die Patch-Antenne 1 umfasst ein elektrisch nichtleitendes Material als Zwischenschicht 2, in dem vorliegenden Fall aus Aluminiumoxid. Die Patch-Antenne 1 umfasst ein Antennenelement 3, das als dünne Schicht aus Gold auf der Zwischenschicht 2 aufgebracht ist.

Die Zwischenschicht 2 und das Antennenelement 3 weisen jeweils rechteckige Abmessungen auf, wobei das Antennenelement 3 auf der Oberfläche der Zwischenschicht 2 mittig angeordnet ist.

Eine kurze Kante 4 des Antennenelementes 3 weist eine Erstreckung in einer x-Richtung auf, die im wesentlichen der halben Wellenlänge entspricht, auf die die Patch-Antenne 1 abgestimmt ist. In der Ebene des Antennenelementes 3 weist dieses in einer zu der x-Richtung senkrechten y-Richtung eine Erstreckung auf, die größer ist als die Erstreckung in x-Richtung. Die Erstreckung in y-Richtung hat einen nur geringen Einfluss auf die Resonanzfrequenz, auf die die Patch-Antenne 1 abgestimmt ist, sondern beeinflusst den Strahlungswiderstand der Patch-Antenne 1 derart, dass ein großes Verhältnis der Erstreckung in y-Richtung zu der Erstreckung in x-Richtung einen geringen Strahlungswiderstand der Patch-Antenne 1 bewirkt und die Dämpfung durch die Patch-Antenne 1 gering hält.

Eine Erstreckung der Zwischenschicht 2 in einer zu der x- und der y-Richtung senkrechten, z-Richtung beträgt ca. 1 bis 2 Prozent der Wellenlänge.

Das Antennenelement 3 der Patch-Antenne 1 wird mittels einer nicht dargestellten Streifenleitung aus einem metallischen Material mit einer Anschlusskonstruktion elektrisch verbunden, wobei die Anschlusskonstruktion eine galvanische Verbindung zu einem als RFID-Element ausgebildeten weiteren Element darstellt. Damit sind die Patch-Antenne 1 und das RFID-Element, dessen Sende- und Empfangseinheit die Patch-Antenne 1 darstellt, auf dem gleichen Lagerbestandteil, speziell in der Ausnehmung an der Stirnfläche des Korpus des Lagerrings des Wälzlagers, angeordnet. Die Streifenleitung kontaktiert dabei das Antennenelement 3 an einer langen Kante 5, die die y-Richtung definiert.

Die Patch-Antenne 1 liefert eine linear polarisierte Strahlung parallel zu der Längskante x als Ausgangsgröße der Antennencharakteristik bzw. lässt sich durch eine linear polarisierte elektromagnetische Strahlung ansprechen, deren elektrischer Feldvektor in z-Richtung, also im wesentlichen senkrecht zu der durch das Antennenelement 3 definierten Ebene, steht.

Die Patch-Antenne 1 ist als Planar-Antenne ausgebildet worden und mittels Platinen-Ätztechnik hergestellt worden. Als von dem Lagerbestandteil unabhängiges Bauteil wurde sie nachträglich in der Ausnehmung in dem Korpus des Lagerbestandteils befestigt. Anschließend wurde die Ausnehmung derart gefüllt, dass die gefüllte Ausnehmung bündig mit der angrenzenden Oberfläche des Korpus des Lagerbestandteils abschließt.

Es versteht sich, dass auch die lange Kante 5 auf eine Wellenlänge abgestimmt sein kann; speziell kann das Antennenelement 3 als dünne Schicht mit in Draufsicht quadratischer Kontur ausgebildet sein, so dass beide Kanten 4, 5 auf die gleiche Wellenlänge abgestimmt sind. Dabei kann das Antennenelement 3 insbesondere durch zirkular polarisierte Strahlung angesprochen werden, so dass mindestens eine der beiden Kanten aktiv ist.

Es versteht sich weiter, dass die lange Kante 5 auf eine andere Wellenlänge als die kurze Kante 4 abgestimmt sein kann, so dass beide Kanten 4, 5 und damit das Antennenelement 3 auf zwei verschiedene Wellenlängen ansprechen, die senkrecht aufeinander stehenden linear polarisierten elektromagnetischen Wellen entsprechen.

Es versteht sich weiter, dass die galvanische Verbindung des Antennenelementes 3 nicht unbedingt in der Oberfläche der Zwischenschicht 2 vorgesehen sein muss; beispielsweise kann vorgesehen sein, dass die Verbindung die Zwischenschicht 2 senkrecht durchdringt und mittig das Antenennelement 3 kontaktiert. Als Alternative zu einer galvanischen Kontaktierung kann eine kapazitive Kontaktierung vorgesehen sein, beispielsweise mittels einer Einlage, die in der Zwischenschicht 2 im wesentlichen mittig unter dem Antennenelement 3 angeordnet ist.

Bei der Beschreibung von Fig. 2 sind gleiche oder in ihrer Wirkung vergleichbare Bestandteile mit den gleichen Bezugszeichen versehen.

Fig. 2 zeigt eine Patch-Antenne 1, die als Anordnung von vier Teil-Antennen 6 ausgebildet ist, wobei jede der Teil-Antennen als Antennenelement 3 ihrerseits als Patch-Antenne ausgebildet ist. Je zwei der Teil-Antennen 6 sind mittels einer nicht-strahlenden galvanischen Verbindung 7 gekoppelt; beide gekoppelte Zweige der Patch-Antenne 1 weisen dann eine gemeinsame nicht-strahlende galvanische Zuleitung 8 auf, die zu einem weiteren Element, speziell einem Sensor, beispielsweise aber auch zu einer Sendeeinheit, oder einer Markierung bzw. einem Informationsträger wie einem RFID-Chip oder einer SAW (surface acoustic wave)-Codierung, führt, als dessen Sende- und Empfangseinheit die Patch-Antenne 1 geschaltet ist.

Die Patch-Antenne 1 ist an einer Lageraufnahme einer Lagervorrichtung angeordnet, und das weitere Element in einem Abstand zu der Patch-Antenne 1, mit dieser durch die Zuleitung 8 verbunden, an einem Lagerbestandteil des in der Lageraufnahme angeordneten Lagers, speziell an einem Außenring eines Wälz- oder Gleitlagers, wobei der Außenring in der Lageraufnahme feststehend angeordnet ist.

Jede der vier Teil-Antennen 6 weist in Draufsicht eine quadratische Kontur auf, wobei die Erstreckung der Teil-Antennen 6 in beiden Raumrichtungen einen Betrag von ca. der halben Wellenlänge, vermindert um die zu der Ebene der Teilantennen 6 senkrechte Erstreckung der Zwischenschicht 2, beträgt. Jede der Teil-Antennen 6 ist wie die in Fig. 1 dargestellte Patch-Antenne 1 ausgebildet. Die vier Teil-Antennen 6 sind auf einer gemeinsamen Zwischenschicht 2 aus einem nichtleitenden dielektrischen Material als elektrisch leitende Filme aufgebracht.

Der Abstand zweier benachbarter Teil-Antennen 6 beträgt in beiden Richtungen der Oberfläche der Zwischenschicht 2 jeweils ca. der halben Wellenlänge, vermehrt um die zu der Ebene der Teilantennen 6 senkrechten Erstreckung der Zwischenschicht 2, so dass die Erstreckung zweier in die gleiche Richtung weisenden Kanten 9, 10 zweier benachbarter Teil-Antennen 6 der Wellenlänge entspricht, auf die die Patch-Antenne 1 abgestimmt ist. Dadurch ist eine gleichphasige Speisung der Einzelelemente der Patch-Antenne 1 gewährleistet.

Weil der Abstand benachbarter Teil-Antennen 6 in beide Richtungen der gleiche ist, ist die Patch-Antenne 1 mittels zirkular polarisierter Strahlung leichter ansprechbar. Weiter weist die Anordnung der vier Teil-Antennen 6 in der Patch-Antenne 1 eine verglichen mit einer einzelnen Teil-Antenne 6 stärker ausgeprägte Richtcharakteristik sowie eine verbesserte Reichweite auf. Der Antennengewinn der Patch-Antenne 1 ist gegenüber dem der einzelnen Teil-Antennen 6 verbessert. Weiter liefert die dargestellte Anordnung eine in Richtung der Leitungen 7, 8 polarisierte Strahlungscharakteristik.

Bei den beiden vorstehend beschriebenen Ausführungsbeispielen bestand jeweils eine galvanisch leitende Verbindung 8 zu dem weiteren Element, als dessen Sende- oder Empfangseinrichtung die Patch-Antenne 1 vorgesehen war. Es versteht sich, dass auch eine kapazitive oder induktive Verbindung vorgesehen sein kann, insbesondere, wenn die Patch-Antenne 1 und das weitere Element auf zueinander beweglichen Teilen des Lagers bzw. der Lageranordnung angeordnet sind.

Bei den vorstehend beschriebenen Ausführungsbeispielen waren die Antennenelemente 3 bzw. 6 durch eine dünne elektrisch leitende Schicht ausgebildet, die von einem Nichtleiter, insbesondere der Oberfläche des Dielektrikums der Zwischenschicht 2, umgeben ist. Es versteht sich, dass das Antennenelement auch als Dielektrikum ausgebildet sein kann, das von einer elektrisch leitenden Schicht begrenzt ist; speziell kann eine quadratische Ausnehmung mit den Abmessungen der Teil-Antennen 6 aus dem zweiten Ausführungsbeispiel in einer metallisch leitenden Schicht, speziell einem Blech einer Hohlleiter-Maske, als Antennenelement wirken.

### Bezugszeichenliste

- 1: Patch-Antenne
- 2: Zwischenschicht
- 3: Antennenelement
- 4: kurze Kante
- 5: lange Kante
- 6: Teil-Antenne
- 7: Verbindung
- 8: Zuleitung
- 9: Kante
- 10: Kante

## Patentansprüche

1. Lagerring eines Lagers, insbesondere eines rotativen oder linearen Wälz- oder Gleitlagers, **gekennzeichnet durch** eine Patch-Antenne (1), die dem Korpus des Lagerrings zugeordnet ist, wobei die Patch-Antenne (1) in einer Ausnehmung oder Öffnung in dem Lagerring aufgenommen ist.

2. Lagerring nach Anspruch 1, **dadurch gekennzeichnet, dass** die Patch-Antenne (1) an dem Korpus des Lagerrings befestigt ist.

3. Lagerring nach Anspruch 2, **dadurch gekennzeichnet, dass** die Ausnehmung oder Öffnung, in der die Patch-Antenne aufgenommen ist, an der Stirnfläche des Korpus des Lagerrings vorgesehen ist.

4. Lagerring nach Anspruch 1, **dadurch gekennzeichnet, dass** die Patch-Antenne mit einem weiteren Element verbunden ist, das an dem Korpus des Lagerrings befestigt ist.

5. Lagerring nach einem der Ansprüche 1 bis 4, **dadurch gekennzeichnet, dass** die Patch-Antenne (1) mittels linear, insbesondere mittels zirkular polarisierter Strahlung ansprechbar ist.

6. Lagerring nach einem der Ansprüche 1 bis 5, **dadurch gekennzeichnet, dass** die Patch-Antenne (1) als von dem Korpus des Lagerrings getrenntes Bauteil gefertigt ist.

7. Lagerring nach einem der Ansprüche 1 bis 6, **dadurch gekennzeichnet, dass** die Patch-Antenne (1) Teil einer Anordnung mehrerer, zusammen wirkender Teil-Antennen (6) ist.

8. Lagerring nach einem der Ansprüche 1 bis 7, **dadurch gekennzeichnet, dass** die Patch-Antenne (1) eine Hohlleiter-Maske umfasst.

## Claims

1. Bearing ring of a bearing, in particular of a rotational roller bearing or sliding bearing, **characterized by** a patch antenna (1) which is assigned to the body of the bearing ring, wherein the patch antenna (1) is accommodated in a recess or opening in the bearing ring.

2. Bearing ring according to Claim 1, **characterized in that** the patch antenna (1) is attached to the body of the bearing ring.

3. Bearing ring according to Claim 2, **characterized in that** the recess or opening in which the patch antenna is accommodated is provided on the end face of the body of the bearing ring.

4. Bearing ring according to Claim 1, **characterized in that** the patch antenna is connected to a further element which is attached to the body of the bearing ring.

5. Bearing ring according to one of Claims 1 to 4, **characterized in that** the patch antenna (1) can be addressed by means of radiation which is polarized in a linear fashion, in particular by means of radiation which is polarized in a circular fashion.

6. Bearing ring according to one of Claims 1 to 5, **characterized in that** the patch antenna (1) is fabricated as a component which is separate from the body of the bearing ring.

7. Bearing ring according to one of Claims 1 to 6, **characterized in that** the patch antenna (1) is part of an arrangement of a plurality of interacting component antennas (6).

8. Bearing ring according to one of Claims 1 to 7, **characterized in that** the patch antenna (1) comprises a waveguide mask.

## Revendications

1. Bague de palier d'un palier, notamment d'un palier à roulement ou d'un palier lisse rotatif ou linéaire, **caractérisée par** une antenne planaire (1) qui est associée au corps de la bague de palier, l'antenne planaire (1) étant reçue dans un évidement ou une ouverture dans la bague de palier.

2. Bague de palier selon la revendication 1, **caractérisée en ce que** l'antenne planaire (1) est fixée sur le corps de la bague de palier.

3. Bague de palier selon la revendication 2, **caractérisée en ce que** l'évidement ou l'ouverture dans lequel ou laquelle est reçue l'antenne planaire est prévu(e) sur la surface frontale du corps de la bague de palier.

4. Bague de palier selon la revendication 1, **caractérisée en ce que** l'antenne planaire est connectée à un autre élément qui est fixé sur le corps de la bague de palier.

5. Bague de palier selon l'une quelconque des revendications 1 à 4, **caractérisée en ce que** l'antenne planaire (1) peut réagir à un rayonnement polarisé de manière circulaire.

6. Bague de palier selon l'une quelconque des revendications 1 à 5, **caractérisée en ce que** l'antenne planaire (1) est fabriquée sous forme de composant séparé du corps de la bague de palier.

7. Bague de palier selon l'une quelconque des revendications 1 à 6, **caractérisée en ce que** l'antenne planaire (1) fait partie d'un agencement de plusieurs antennes planaires (6) coopérantes.

8. Bague de palier selon l'une quelconque des revendications 1 à 7, **caractérisée en ce que** l'antenne planaire (1) comprend un masque à conducteur creux.
